# EUROPEAN PATENT APPLICATION

(11) **EP 4 844 676 A1**
(43) Date of publication of application: **25.11.2026**
(21) Application number: 26179462.2
(22) Date of filing: 19.05.2026
(51) Int. Cl.: G06T 7/00, G06T 7/62, G06V 10/46, G06V 10/82, G06V 20/64

(54) **IMAGE PROCESSING APPARATUS, IMAGE PROCESSING METHOD, AND COMPUTER PROGRAM**

(30) Priority: 22.05.2025 JP 2025085411
(71) Applicant: CANON KABUSHIKI KAISHA, Ohta-ku Tokyo 146-8501 (JP)
(72) Inventor: YAMAZAKI, Fukashi, Tokyo (JP); AMBO, Shintaro, Tokyo (JP)
(74) Representative: WESER & Kollegen Patentanwälte PartmbB

(57) **Abstract**

There is provided an image processing apparatus (100) including an image data obtaining unit (110) that obtains three-dimensional image data, a setting unit (120) that sets a first reference point and a second reference point in a region of an object depicted in the three-dimensional image data, a calculating unit (130) that calculates a first feature value relating to the object using the three-dimensional image data and coordinates of the first reference point, and calculates a second feature value relating to the object by using the three-dimensional image data and coordinates of the second reference point, a generating unit (140) that generates feature-value image data by setting values for respective voxels based on the coordinates of the first and second reference points using the first and second feature values, and a recognizing unit (150) that performs image recognition by inputting at least the feature-value image data into a learned model.

## Description

### TECHNICAL FIELD

The present disclosure relates to an image processing apparatus, an image processing method, and a computer program.

### BACKGROUND

In a case where an abnormality of an organ having an elongated and complicated anatomical structure such as a blood vessel or a pancreas in three-dimensional image data is recognized, it is important to explicitly ascertain the structure. For example, Japanese Patent Laid-Open No. 2017-047819 discloses a method of detecting abnormality of an organ by calculating a feature value regarding a shape at each position in an extending direction of a center line of the organ and analyzing a difference from a reference.

### SUMMARY

However, the feature value calculated in the extending direction of the center line as described above does not have spatial information as an image. Therefore, it is difficult to input such a feature value into an image recognition model based on deep learning.

According to an embodiment of the present disclosure, there is provided a technology for improving recognition accuracy of an image recognition model by using a feature value in which an anatomical structure of an elongated organ is ascertained (grasped) as an input.

The present disclosure in its first aspect provides an image processing apparatus as specified in claim 1. Optional features are specified in claim 2 to 19.

The present disclosure in its second aspect provides an image processing method as specified in claim 20.

The present disclosure in its third aspect provides a computer program as specified in claim 21.

According to first to third embodiments, the recognition accuracy of an image recognition model can be improved by using a feature value in which an anatomical structure of an elongated organ is ascertained as an input.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram for illustrating an example of a configuration of an image processing system according to a first embodiment.
Fig. 2 is a diagram for illustrating an example of a functional configuration of an image processing apparatus according to the first embodiment.
Fig. 3 is a diagram for illustrating an example of a processing procedure of the image processing apparatus according to the first embodiment.
Fig. 4 is a diagram for illustrating an example of a processing procedure of the image processing apparatus according to the first embodiment.
Fig. 5A is a diagram for describing an image according to the first embodiment.
Fig. 5B is a diagram for describing an image according to the first embodiment.
Fig. 6 is a diagram for describing a feature value calculated at each reference point according to the first embodiment.
Fig. 7A is a diagram for describing an image according to the first embodiment.
Fig. 7B is a diagram for describing an image according to the first embodiment.
Fig. 7C is a diagram for describing an image according to the first embodiment.
Fig. 7D is a diagram for describing an image according to the first embodiment.
Fig. 8 is a diagram for illustrating an example of a functional configuration of an image processing apparatus according to a second embodiment.
Fig. 9 is a diagram for illustrating an example of a processing procedure of the image processing apparatus according to the second embodiment.
Fig. 10A is a diagram for describing an image according to a third embodiment.
Fig. 10B is a diagram for describing an image according to the third embodiment.

### DESCRIPTION OF THE EMBODIMENTS

Hereinafter, embodiments for implementing the present disclosure will be described in detail with reference to the drawings. However, dimensions, materials, shapes, relative positions of elements, and the like described in the following embodiments are freely selected, and can be changed according to a configuration of an apparatus to which the present disclosure is applied or various conditions. The same or equivalent elements, members, and processes illustrated in the drawings are denoted by the same reference numerals, and redundant description will be omitted as appropriate. In addition, in each drawing, some of the elements, the members, and the processes will be omitted as appropriate. Note that the scope of the present disclosure is not limited to the following embodiments.

In addition, the present disclosure will be described below by exemplifying an image processing apparatus that recognizes a region suspected of pancreatic cancer for CT image data acquired by an X-ray computed tomography (X-ray CT) apparatus. The CT image data is an example of three-dimensional image data, but the present disclosure is also applicable to three-dimensional image data such as tomographic image data imaged by other imaging apparatuses such as a nuclear magnetic resonance imaging (MRI) apparatus, a positron emission tomography (PET) apparatus, an ultrasonic imaging apparatus, and a radiation imaging apparatus.

Hereinafter, a configuration using X-rays as an example of radiation will be described. However, the radiation may be an X-ray or another radiation. In the following embodiments, the term "radiation" may include, for example, electromagnetic radiation such as X-rays and γ-rays, and particle radiation such as α-rays, β-rays, particle rays, proton rays, heavy ion rays, and meson rays.

Furthermore, in the following description, a machine learning model is a learning model based on a machine learning algorithm. Specific examples of the machine learning algorithm include a nearest-neighbor interpolation, a naive Bayes algorithm, a decision tree, and a support vector machine. Furthermore, deep learning in which a feature value and a combined weighting coefficient for learning are generated by itself by using a neural network is also exemplified. Among the above algorithms, available algorithms can be appropriately used and applied to the following embodiments. In addition, learning data (training data) includes a pair of input data and output data. Furthermore, ground truth data is output data of learning data.

In addition, a learned model is a model obtained by training (learning) a machine learning model according to any machine learning algorithm such as deep learning by using appropriate learning data in advance. However, it is assumed that the learned model is obtained in advance by using appropriate learning data, but the learned model is not a model that does not perform further learning, and is a model that can also perform incremental learning. The incremental learning can be performed even after an apparatus is installed in a use destination. Note that obtaining output data from input data by a learned model may be expressed as "inferring".

### <First Embodiment>

### (Overview)

An image processing apparatus according to a first embodiment of the present disclosure performs segmentation of a region suspected of pancreatic cancer depicted in CT image data (an example of recognition of abnormality relating to an object) by using a recognition model based on deep learning with image data as an input. Hereinafter, a recognition model based on deep learning will be referred to as an image recognition model, and a region suspected of pancreatic cancer will be referred to as a pancreatic cancer suspected region.

The image recognition model in the first embodiment estimates a pancreatic cancer suspected region by using, as input, CT image data and a feature value regarding the pancreas calculated at each point (an example of a first reference point and a second reference point) set in a running direction (hereinafter, referred to as an extending direction) of a line (center line) indicating the center of the pancreas. Here, the extending direction of the center line of the pancreas is an example of a predetermined axis corresponding to an object region. The center line of the pancreas is a line parallel to the extending direction of the pancreas (object region). The feature value regarding the pancreas calculated in the extending direction of the center line of the pancreas is, for example, a statistical value of voxel values (for example, CT value) within a predetermined window (range) centered on a plurality of any voxels (examples of reference points) on the center line. For example, the feature value obtained based on the coordinates of the first reference point can be referred to as a first feature value, and the feature value obtained based on the coordinates of the second reference point can be referred to as a second feature value. Since such a feature value regarding the pancreas does not have spatial information and is data of a dimension different from that of the CT image data, it is difficult to directly input the feature value into the image recognition model.

Therefore, the image processing apparatus according to the first embodiment can input the feature value regarding the pancreas into the image recognition model by converting the feature value regarding the pancreas calculated along the center line of the pancreas into feature-value image data expressed in the same coordinate system as the CT image data. More specifically, the image processing apparatus generates the feature-value image data by setting the feature value calculated at each reference point as a voxel value for the voxel of the feature-value image data corresponding to the coordinates of a plurality of any reference points on the center line. In the first embodiment, the feature-value image data has the same image size as the CT image data. The image processing apparatus according to the first embodiment can input the feature value regarding the pancreas that originally does not have spatial information into the image recognition model by imaging (converting into an image) the feature value. The image processing apparatus according to the first embodiment inputs the CT image data and the feature-value image data into the image recognition model and executes inference processing, thereby estimating a region of suspected pancreatic cancer depicted in the CT image data.

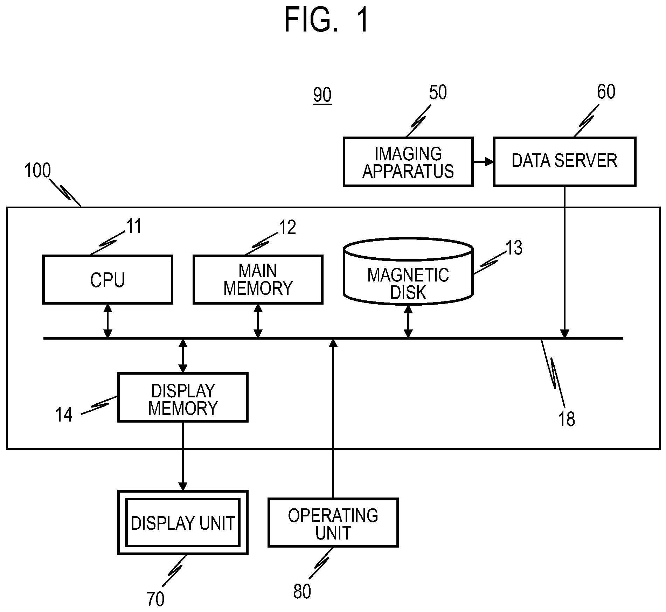

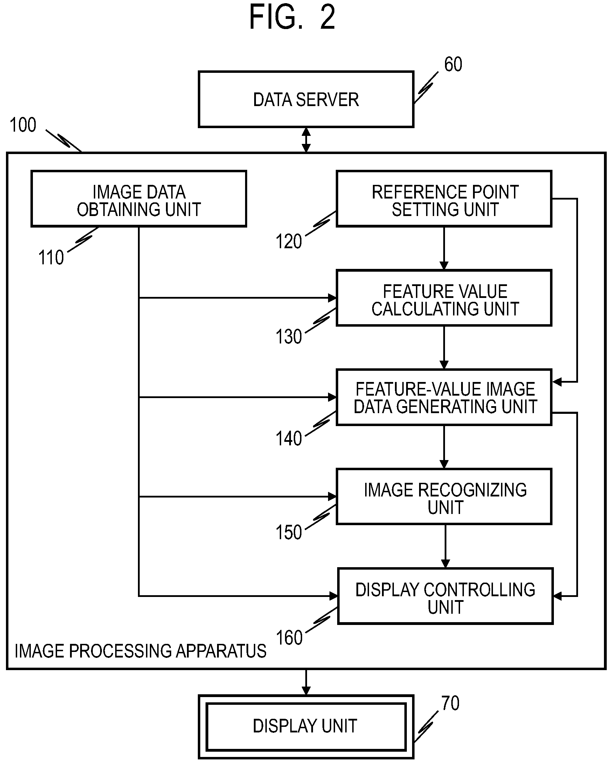

Hereinafter, configurations and processes relating to an image processing system, an image processing apparatus, and an image processing method according to a first embodiment of the present disclosure will be described with reference to Figs. 1 and 2.

### (System configuration)

Fig. 1 illustrates a configuration of an image processing system 90 including an image processing apparatus 100 according to the first embodiment. The image processing system 90 includes an imaging apparatus 50 that captures an image of a subject and obtains image data, a data server 60 that stores the captured image data, an image processing apparatus 100, a display unit 70 that displays the image data and an image processing result, and an operating unit 80 for inputting an instruction from a user.

The image processing apparatus 100 is, for example, a computer, and executes image processing according to the first embodiment. The image processing apparatus 100 is provided with a central processing unit (CPU) 11, a main memory 12, a magnetic disk 13, and a display memory 14.

The CPU 11 integrally controls operation of each element of the image processing apparatus 100. The main memory 12 stores a control program executed by the CPU 11 and provides a work area when the program is executed by the CPU 11. The magnetic disk 13 stores various types of application software including an operating system (OS), device drivers of peripheral devices, and a program for performing image processing according to the first embodiment that will be described later. The display memory 14 temporarily stores data to be displayed on the display unit 70.

The display unit 70 is, for example, a liquid crystal monitor, and displays image data based on an output from the display memory 14. The operating unit 80 is, for example, a mouse or a keyboard, and is used for a user to input position information, text, and the like. The display unit 70 may be, for example, a touch panel monitor that receives an operation input, and in this case, the display unit 70 may also be used as the operating unit 80. The operating unit 80 may include, for example, a stylus pen. The above elements are communicatively connected to each other via a common bus 18.

The imaging apparatus 50 is, for example, a computed tomography (CT) apparatus or a magnetic resonance imaging (MRI) apparatus. The imaging apparatus 50 transmits the obtained image data to the data server 60. Note that an imaging controlling unit (not illustrated) that controls the imaging apparatus 50 may be included in the image processing apparatus 100.

The data server 60 stores image data captured by the imaging apparatus 50. The data server 60 is, for example, a picture archiving and communication system (PACS) server. The image processing apparatus 100 obtains image data from the data server 60 via a network such as a local area network (LAN). Note that the image processing apparatus 100 may obtain image data from the imaging apparatus 50.

### (Functional configuration)

Next, a functional configuration of the image processing apparatus 100 according to the first embodiment will be described with reference to Fig. 2. Fig. 2 illustrates an example of a functional configuration of the image processing apparatus 100 according to the first embodiment. In the image processing apparatus 100, the CPU 11 executes the program stored in the main memory 12 to realize the functions of the units illustrated in Fig. 2. The subject that executes the program may be one or more CPUs, and the main memory that stores the program may also be one or more memories. In addition, another processor such as a graphics processing unit (GPU) may be used instead of or in combination with the CPU. That is, at least one processor (hardware) executes a program stored in at least one memory communicatively connected to the processor to realize the functions of the units illustrated in Fig. 2.

The function of each unit of the image processing apparatus 100 may be realized by using a circuit such as an application specific integrated circuit (ASIC). In addition, the function of each unit of the image processing apparatus 100 may be realized by a combination of software based on a program and a circuit such as an ASIC.

A functional configuration of the image processing apparatus 100 will be described. As illustrated in Fig. 2, the image processing apparatus 100 includes an image data obtaining unit 110, a reference point setting unit 120, a feature value calculating unit 130, a feature-value image data generating unit 140, an image recognizing unit 150, and a display controlling unit 160.

The image data obtaining unit 110 obtains three-dimensional image data from the data server 60. In the first embodiment, the three-dimensional image data is CT image data. Note that the image data obtaining unit 110 may obtain three-dimensional image data from the imaging apparatus 50.

The reference point setting unit 120 obtains a predetermined axis corresponding to the region of the object depicted in the three-dimensional image data based on a file stored in the data server 60, a mouse input on the operating unit 80, or the like, and sets a plurality of reference points for calculating a feature value along the predetermined axis. In the first embodiment, the object is a pancreas, and the predetermined axis is a center line of the pancreas.

In the first embodiment, information indicating the center line of the pancreas, specifically, an end point on the head side of the pancreas, an end point on the tail side of the pancreas, and a plurality of intermediate points between the two points are given through a mouse operation of a user. The center line of the pancreas is obtained through spline interpolation processing of these points. The reference point setting unit 120 in the first embodiment sets all the voxels through which the center line of the pancreas passes as reference points. In addition to the above setting, the reference points may be sampled at intervals from adjacent reference points. In this case, the reference points may be set at equal intervals (for example, at intervals of 1 mm), or need not be set at equal intervals.

The feature value calculating unit 130 calculates a feature value regarding the object based on the coordinates of each reference point. The feature value in the first embodiment is an average value of CT values (intensity values) in a window of a predetermined size (for example, 7 × 7 × 7) including a voxel corresponding to coordinates of a reference point. Note that the window may be freely set according to a desired configuration. For example, the window may be set so that the center of the window is a voxel corresponding to the coordinates of the reference point, or the window may be set so that the center of the window is located at a position shifted from the voxel. The feature value calculating unit 130 calculates a feature value at each of the reference points set by the reference point setting unit 120. As the feature value, another statistical feature value (for example, a maximum value, a minimum value, a median value, or a variance) may be used.

The feature-value image data generating unit 140 initializes the feature-value image data, and generates the feature-value image data by setting a value for each voxel of the feature-value image data based on the coordinates of the plurality of reference points and the feature value corresponding to the coordinates. Furthermore, the feature-value image data generating unit 140 may expand the region in which the voxel value is set in the feature-value image data by a predetermined algorithm based on the coordinates of the reference points and the feature value corresponding thereto. Note that the feature-value image data is image data expressed in the same coordinate system as the three-dimensional image data, and coordinates of at least one or more voxels in the feature-value image data correspond to coordinates of the voxels in the three-dimensional image data. Hereinafter, a region in which voxel values are set based on the coordinates of the reference points and the feature values corresponding thereto will be referred to as a feature-value setting region.

In the first embodiment, for any reference point, the feature-value image data generating unit 140 sets the feature value calculated at the reference point in a voxel of feature-value image data corresponding to coordinates of the reference point. The feature-value image data generating unit 140 generates feature-value image data by similarly performing processing on all the reference points. Furthermore, in the first embodiment, the feature-value image data generating unit 140 expands the feature-value setting region by applying a predetermined number of times of dilation processing to the feature-value image data. The feature-value image data in the first embodiment has the same image size as the three-dimensional image data, and coordinates of each voxel in the feature-value image data correspond to coordinates of each voxel in the three-dimensional image data.

First, the image recognizing unit 150 obtains a trained image recognition model (learned model) from the data server 60. The image recognizing unit 150 recognizes the abnormality of the object depicted in the three-dimensional image data by inputting at least the feature-value image data into the trained image recognition model. The image recognizing unit 150 stores the recognition result in the data server 60 or outputs the recognition result to the display memory 14 for display on the display unit 70.

The image recognizing unit 150 according to the first embodiment uses a U-Net (one of convolutional neural networks) as an image recognition model. It is assumed that this U-Net is trained to estimate a pancreatic cancer suspected region using, as an input, image data (hereinafter, referred to as channel combination image data) obtained by combining CT image data and feature-value image data as separate channel data. For example, the channel combination image data may include the CT image data as data of the first channel and the feature-value image data as data of the second channel.

More specifically, the U-Net is trained according to a known method using CT image data for learning, feature-value image data corresponding to the CT image data, and ground truth data representing a pancreatic cancer suspected region corresponding to the CT image data as training data (learning data). The training data may include, for example, channel combination image data obtained by combining CT image data and feature-value image data corresponding to the CT image data as separate channel data as input data and ground truth data as described above as output data. The feature-value image data for learning is image data generated by a method similar to that of the feature-value image data generating unit 140. In addition, the ground truth data representing the pancreatic cancer suspected region is image data in which the pancreatic cancer suspected region and other regions are distinguishably represented. The ground truth data may be, for example, data annotated by a doctor or the like, or data created by known rule-based processing or the like in which quality is guaranteed.

The image recognizing unit 150 according to the first embodiment uses, as an input of the U-Net, the image data obtained by combining the CT image data and the feature-value image data as separate channel data, but a configuration of the U-Net relating to an input and a method of combining the feature-value image data are not limited thereto. As another configuration of the U-Net, for example, the CT image data and the feature-value image data may be respectively input into different input layers, or the feature-value image data may be combined with an output of an intermediate layer. In addition, as another combining method, the image data to be combined and the feature-value image data may be combined using a sum operation for each element, a product operation for each element, or the like.

Note that any image recognition model may be used as long as the image recognition model can recognize an abnormality of an object using image data as an input. For example, the model may be another model based on deep learning such as a ViT (Vision Transformer). Furthermore, the model may be a model based on traditional machine learning such as a support vector machine (SVM), or may be a statistical model such as a Gaussian mixture model (GMM).

The present disclosure can be applied to any image recognition task, and when the present disclosure is applied to an image recognition task other than segmentation, a model suitable for the task may be used. For example, in the case of an image classification task, similarly to the image recognition model in the first embodiment, an image recognition model configured to perform class classification on channel combination image data that is an input can be used. Specific examples of the image recognition model include a ResNet and an EfficientNet. Similarly, in the case of an object detection task, an image recognition model configured to estimate a position of an object using the channel combination image data as an input is used. Specific examples of the image recognition model include YOLO (You Only Look Once) and DETR (Detection Transformer).

The display controlling unit 160 controls display on the display unit 70. Using the display memory 14, the display controlling unit 160 may cause, for example, various images such as a CT image and feature-value image data, and various types of information such as a recognition result by the image recognizing unit 150, patient information, and examination information to be displayed on the display unit 70.

### (Processing procedure)

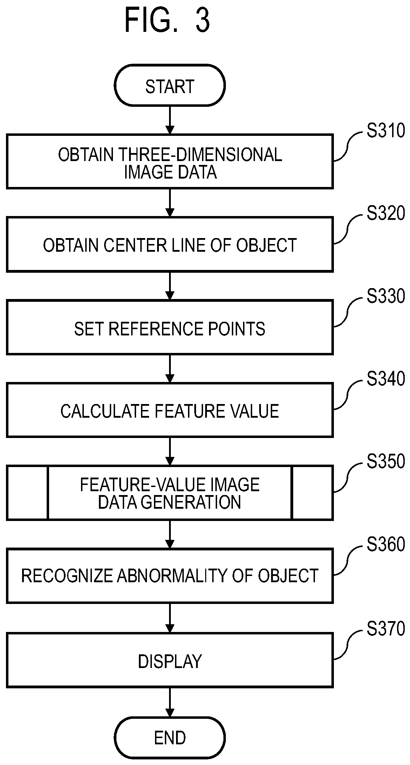

Next, a processing procedure of the image processing apparatus 100 according to the first embodiment will be described with reference to Fig. 3. Fig. 3 is a flowchart illustrating an example of a processing procedure of the image processing apparatus 100 according to the first embodiment.

### (Step S310)

In step S310, the image data obtaining unit 110 obtains CT image data from the data server 60, and transmits the CT image data to the reference point setting unit 120, the feature value calculating unit 130, the feature-value image data generating unit 140, the image recognizing unit 150, and the display controlling unit 160. The image data obtaining unit 110 may obtain the CT image data from the imaging apparatus 50.

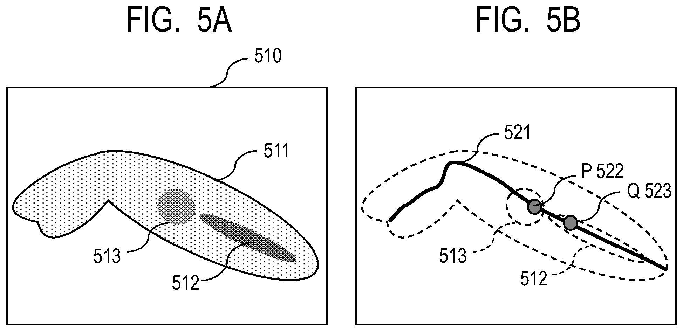

Fig. 5A is a schematic diagram of an axial cross-sectional image of CT image data to be processed by the image processing apparatus 100 according to the first embodiment. In CT image data 510 illustrated in Fig. 5A, a pancreas 511, a main pancreatic duct 512, and pancreatic cancer 513 are depicted. The pancreatic cancer 513 is depicted to have a CT value greater than that of a region of the main pancreatic duct 512 and slightly smaller than that of a region of normal pancreatic parenchyma (a region excluding the main pancreatic duct 512 and the pancreatic cancer 513 in the pancreas 511).

### (Step S320)

In step S320, the reference point setting unit 120 obtains a center line of the pancreas based on a plurality of points input through a mouse operation of the user. As an example, the reference point setting unit 120 obtains the center line of the pancreas by performing spline interpolation processing based on the end point on the head side of the pancreas depicted in the CT image data, the end point on the tail side of the pancreas, and a plurality of intermediate points between the two points. Note that a method of obtaining the center line is not limited thereto. For example, the center line may be obtained using any other interpolation processing or the like.

### (Step S330)

In step S330, the reference point setting unit 120 sets a plurality of reference points for calculating a feature value in the extending direction of the center line of the pancreas. In the first embodiment, the end point on the tail side of the pancreas is set as a start point, the end point on the head side of the pancreas is set as an end point, and all voxels through which the center line of the pancreas passes are set as reference points. The reference point setting unit 120 transmits the set reference points to the feature value calculating unit 130 and the feature-value image data generating unit 140.

Fig. 5B illustrates a center line 521 of the pancreas 511 in the CT image data 510 obtained by the reference point setting unit 120 and reference points set by the reference point setting unit 120. In the first embodiment, the reference point setting unit 120 sets all the voxels through which the center line of the pancreas passes as reference points, but Fig. 5B illustrates only a reference point P522 and a reference point Q523 necessary for the description of the present processing. The reference point P522 is set at a position where the pancreatic cancer 513 exists, and the reference point Q523 is set at a position where the main pancreatic duct 512 exists. Note that Fig. 5B illustrates the entire center line of the pancreas on a single axial cross-sectional image in order to simplify the description, but since the pancreas originally has a three-dimensionally bent shape, the center line of the pancreas is also three-dimensionally bent along the shape in many cases.

### (Step S340)

In step S340, the feature value calculating unit 130 calculates a feature value regarding the pancreas based on the coordinates of each reference point. The feature value calculating unit 130 according to the first embodiment obtains, as a feature value, an average value of CT values in a window having five voxels on one side centered on a voxel corresponding to coordinates of a reference point in CT image data. The feature value calculating unit 130 transmits the feature value calculated at each reference point to the feature-value image data generating unit 140.

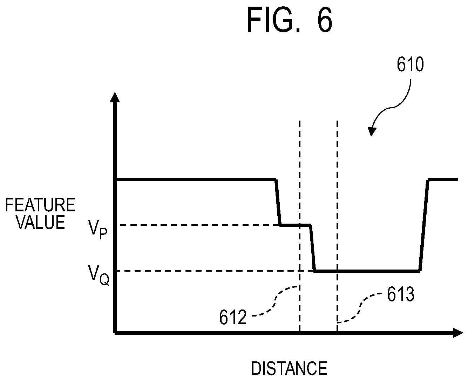

Fig. 6 is a diagram visualizing the feature value calculated at each reference point by the feature value calculating unit 130 as a graph for describing the first embodiment. The horizontal axis of the graph illustrated in Fig. 6 indicates a distance value when the distance is traced in the extending direction of the center line with the end point on the head side of the pancreas as a reference (the origin of the graph), and the vertical axis indicates a value of a feature value. As described above, the CT value of the pancreatic cancer region is greater than that of the main pancreatic duct region and smaller than that of the normal pancreatic parenchyma region. Therefore, a value V_{P} of the feature value (an average value of the voxels in the window) is slightly small at a position 612 corresponding to the reference point P522, and a value V_{Q} of the feature value is smaller than the value V_{P} of the feature value at a position 613 corresponding to the reference point Q523 at the position where the main pancreatic duct exists. Thus, the feature value calculated in the extending direction of the center line of the pancreas can be a clue for performing segmentation of the pancreatic cancer suspected region.

### (Step S350)

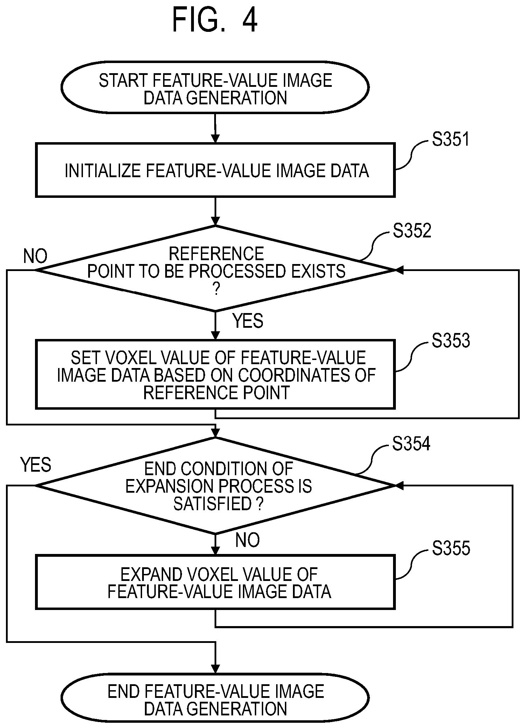

In step S350, the feature-value image data generating unit 140 generates feature-value image data based on the coordinates of each reference point and the feature corresponding thereto. The feature-value image data generating unit 140 transmits the generated feature-value image data to the image recognizing unit 150. In addition, the feature-value image data generating unit 140 may transmit the generated feature-value image data to the display controlling unit 160. Hereinafter, the processing of this step will be described in detail with reference to Fig. 4. Fig. 4 is a flowchart illustrating an example of a processing procedure of feature-value image data generation according to the first embodiment.

### (Step S351)

In step S351, the feature-value image data generating unit 140 initializes the feature-value image data. In the first embodiment, the feature-value image data is image data having the same coordinate system and the same image size as the CT image data. The feature-value image data generating unit 140 initializes each voxel of the feature-value image data with an appropriate value according to a value range of the feature value. Since the feature value in the first embodiment is the average value of the voxels in the window on the CT image data, the feature-value image data generating unit 140 initializes each voxel of the feature-value image data with an initialization value of -50 based on, for example, the lower limit of the CT value that can be taken by the pancreas or the main pancreatic duct.

### (Step S352)

In step S352, the feature-value image data generating unit 140 determines whether there is a reference point to be processed in step S353 that will be described later. If there is an unprocessed reference point, the feature-value image data generating unit 140 selects a reference point to be processed, and the processing proceeds to step S353. If there is no unprocessed reference point, the processing proceeds to step S354. In the first embodiment, the feature-value image data generating unit 140 sequentially selects a reference point from the end point on the tail side of the pancreas toward the end point on the head side of the pancreas and sequentially executes the processing in step S353.

### (Step S353)

In step S353, the feature-value image data generating unit 140 sets the value of the feature value calculated at the reference point for the voxel of the feature-value image data corresponding to the coordinates of the reference point to be processed. Thereafter, the processing returns to the determination processing in step S352.

For example, in a case where the reference point P522 is selected as a reference point to be processed in step S352, the feature-value image data generating unit 140 sets the value V_{P} of the feature value calculated at the reference point P522 in the voxel of the feature-value image data corresponding to coordinates (x_{P}, y_{P}, z_{P}) of the reference point P522. Similarly, in a case where the reference point Q523 is selected in step S352, the feature-value image data generating unit 140 sets the value V_{Q} of the feature value calculated at the reference point in the voxel of the feature-value image data corresponding to the coordinates (x_{Q}, y_{Q}, z_{Q}) of the reference point Q523. The feature-value image data generating unit 140 similarly processes the other reference points and sets the values of the feature values for the voxels of the feature-value image data.

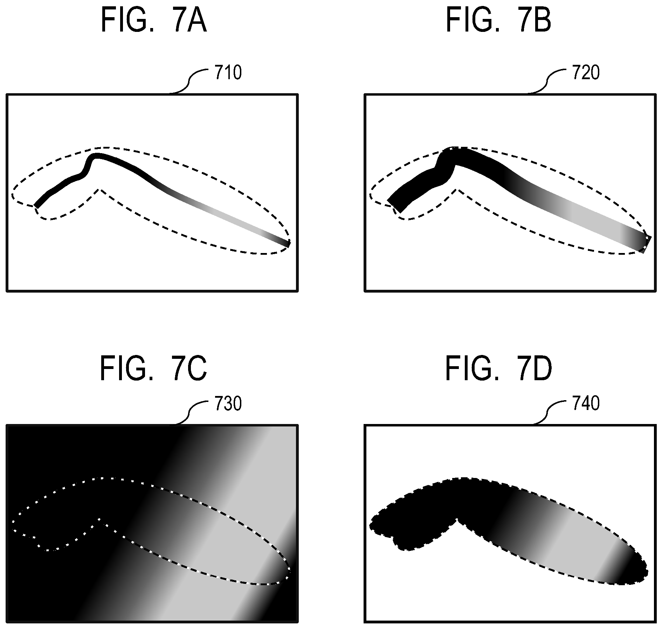

By repeatedly executing steps S352 and S353, the feature-value image data generating unit 140 generates feature-value image data 710 as illustrated in Fig. 7A. Here, Figs. 7A to 7D illustrate examples of the feature-value image data. In Figs. 7A to 7D, the dark color represents that the voxel value is great, and the light color represents that the voxel value is small.

### (Step S354)

In step S354, the feature-value image data generating unit 140 determines whether or not an end condition of the expansion processing of the feature-value setting region is satisfied, and determines whether or not the processing in step S355 is executed. When the end condition of the expansion processing of the feature-value setting region is satisfied, the processing in step S350 ends, and the processing proceeds to step S360. Otherwise, the processing proceeds to step S355. In the first embodiment, "application of the predetermined number of times of expansion processing" is set as an end condition of the expansion processing. In the first embodiment, the predetermined number of times relating to the end condition is illustratively five times.

### (Step S355)

In step S355, the feature-value image data generating unit 140 applies dilation processing, which is an example of expansion processing, to the feature-value image data generated up to this step. More specifically, in the dilation processing, in a case where there is at least one voxel in which a value of the feature value is set within a range represented by a predetermined structuring element for each voxel in the feature-value image data, the value of the feature value is set for the voxel. As a result, the region in which the value of the feature value is set in the feature-value image data is expanded, and the region in which the initialization value is set is reduced. In the first embodiment, a sphere having a radius of 1 voxel is used as the predetermined structuring element.

For example, in a voxel adjacent to the voxel corresponding to the coordinates of the reference point, there is a voxel which corresponds to the coordinates of the reference point and for which the value of the feature value is set within the range represented by the sphere with a radius of 1 voxel. Therefore, the feature-value image data generating unit 140 sets the value of the feature value of the voxel corresponding to the coordinates of the reference point for the voxel adjacent to the voxel corresponding to the coordinates of the reference point. By performing such processing, the feature-value image data generating unit 140 can expand the feature-value setting region in which the value of the feature value is set. Furthermore, by repeatedly performing such processing, the feature-value image data generating unit 140 can further expand the feature-value setting region based on the feature-value setting region expanded in the previous dilation processing.

As the structuring element, a structuring element having an appropriate size and shape may be used based on the property of an object or the like. Furthermore, in a case where there is at least one voxel for which a value of a feature value is set within a range represented by a predetermined structuring element with respect to each voxel having an initial value in the feature-value image data, the feature-value image data generating unit 140 may set the value of the feature value for the voxel.

By repeatedly executing steps S354 and S355, the feature-value image data generating unit 140 can generate feature-value image data 720 illustrated in Fig. 7B from the feature-value image data 710 illustrated in Fig. 7A. In the feature-value image data 720, the feature-value setting region is expanded more than in the feature-value image data 710.

Through the above processing, the feature-value image data generating unit 140 generates feature-value image data. Note that the processing of expanding the feature-value setting region as in steps S354 and S355 is not essential for the minimum configuration in implementing the present disclosure. Note that the feature-value image data generating unit 140 may smooth the voxel value by using a Gaussian filter, linear interpolation, or the like in order to suppress a sudden change in the voxel value in the feature-value image data.

### (Step S360)

In step S360, the image recognizing unit 150 first obtains internal parameters of the U-Net obtained through training from the data server 60, and constructs a trained U-Net (learned model). Next, the image recognizing unit 150 combines the CT image data and the feature-value image data as channel data to obtain channel combination image data. Subsequently, the image recognizing unit 150 inputs the channel combination image data into the U-Net and executes forward propagation processing to perform segmentation of the pancreatic cancer suspected region. The image recognizing unit 150 generates image data representing the pancreatic cancer suspected region (hereinafter, referred to as pancreatic cancer region image data) and transmits the image data to the display controlling unit 160. Note that the construction of the learned model does not need to be performed in each series of image processing, and may be performed only in the first image processing.

### (Step S370)

In step S370, the display controlling unit 160 presents the recognition result of suspected pancreatic cancer to the user by causing the pancreatic cancer region image data to be displayed on the display unit 70 together with the CT image data in a form (identifiable form) that the pancreatic cancer region image data can be easily identified by the user. Examples of the identifiable form include color display of a region or outline of suspected pancreatic cancer as a recognition result of suspected pancreatic cancer, and display of a visual indicator such as an arrow or a balloon explicitly indicating a pancreatic cancer suspected region.

Furthermore, the image processing apparatus 100 may determine the presence or absence of a pancreatic cancer suspected region based on the recognition result of the pancreatic cancer suspected region, and present the result to the user. In this case, the display controlling unit 160 may also cause information regarding indirect findings relating to pancreatic cancer obtained by an apparatus outside the image processing apparatus 100 to be displayed together with the result. The indirect findings relating to pancreatic cancer are, for example, pancreatic atrophy, pancreatic duct dilatation, pancreatic duct obstruction, and a pancreatic tumor, and the display controlling unit 160 may cause a region of these indirect findings or the presence or absence of the indirect findings to be displayed on the display unit 70 in a form that can be identified by the user.

Furthermore, the display controlling unit 160 may also cause the feature-value image data generated by the feature-value image data generating unit 140 to be displayed on the display unit 70. In such a case, it is possible to present, to the user, the feature-value image data that is easy to visually ascertain with respect to the feature value that is the basis of the recognition result of the suspected pancreatic cancer. Note that, when the feature-value image data is displayed, any image processing may be performed, and the feature-value image data may be displayed in a form in which the user can easily ascertain the feature value, such as color display.

Furthermore, the display controlling unit 160 may cause the CT image data, the pancreatic cancer region image data, the feature-value image data, and the like to be displayed on the display unit 70 side by side, in a switching manner or in an overlapping manner. In this case, the display controlling unit 160 can cause these images to be displayed on the display unit 70 in an easily comparable mode, and the convenience of the image processing apparatus 100 can be improved. Note that the display controlling unit 160 may cause an image to be switched and displayed according to an input using a mouse operation or the like by the user. Furthermore, the display controlling unit 160 may set a mixing ratio, transparency, and the like of images to be superimposed according to an input using a mouse operation or the like by the user. When the display processing is performed in step S370, a series of processing by the image processing apparatus 100 according to the first embodiment ends.

As described above, the image processing system 90 according to the first embodiment includes the image processing apparatus 100 and the imaging apparatus 50 that images an object and obtains three-dimensional image data. The image processing apparatus 100 includes an image data obtaining unit 110, a reference point setting unit 120, a feature value calculating unit 130, a feature-value image data generating unit 140, and an image recognizing unit 150.

The image data obtaining unit 110 functions as an example of an image data obtaining unit that obtains three-dimensional image data including a plurality of pieces of tomographic image data. The reference point setting unit 120 functions as an example of a setting unit that sets a plurality of reference points for a region of an object depicted in three-dimensional image data. The feature value calculating unit 130 functions as an example of a calculating unit that calculates a plurality of feature values regarding the object based on the coordinates of each of the plurality of reference points by using the three-dimensional image data. In addition, the feature-value image data generating unit 140 functions as an example of a generating unit that sets a value for a voxel based on the coordinates of each of the plurality of reference points, by using each of the plurality of feature values based on the coordinates of the plurality of respective reference points, and generates feature-value image data expressed in the same coordinate system as the three-dimensional image data. The image recognizing unit 150 functions as an example of a recognizing unit that performs image recognition on the object by using at least the feature-value image data as an input of the learned model.

More specifically, the reference point setting unit 120 may set at least the first reference point and the second reference point for the region of the object depicted in the three-dimensional image data. In addition, the feature value calculating unit 130 may use the three-dimensional image data to calculate a first feature value regarding the object based on the coordinates of the first reference point, and calculate a second feature value regarding the object based on the coordinates of the second reference point. The feature-value image data generating unit 140 may set a value for a voxel based on the coordinates of the first reference point by using the first feature value, set a value for a voxel based on the coordinates of the second reference point by using the second feature value, and generate feature-value image data expressed in the same coordinate system as the three-dimensional image data.

As described above, the image processing apparatus 100 according to the first embodiment sets the reference point for the object to calculate the feature value, and images the feature value based on the coordinate values of the reference point and the value of the feature value. As a result, the image data relating to the feature value of the object can be input into the image recognition model. Since such a feature value is a feature value in which a complicated anatomical structure of an object is explicitly considered, the image processing apparatus 100 according to the first embodiment can improve the accuracy of abnormality recognition particularly for an elongated organ or the like.

Note that the reference point setting unit 120 may set each of the first reference point and the second reference point based on a predetermined axis corresponding to the region of the object. Here, the predetermined axis may be, for example, a center line of a region of the object. Therefore, the reference point setting unit 120 may set each of the first reference point and the second reference point in the extending direction of the center line of the object. According to such a configuration, by setting the reference point based on the predetermined axis (center line), the feature-value image data having the feature value based on a position conforming to a shape of the object can be generated, and the accuracy of the image recognition can be further improved.

Furthermore, the feature-value image data generating unit 140 may set the first feature value for a voxel corresponding to the coordinates of the first reference point in the feature-value image data, and can set the second feature value for a voxel corresponding to the coordinates of the second reference point. Furthermore, the feature-value image data generating unit 140 may apply at least one of the dilation processing, the region growing processing, and the interpolation processing to the feature-value image data to expand the setting ranges of the first feature value and the second feature value set for the feature-value image data. As a result, the feature-value image data generating unit 140 can set values based on the first feature value and the second feature value for voxels in a wider range of the feature-value image data. According to such a configuration, since the feature-value image data for which the value based on the feature value is set in a wider range can be generated, the accuracy of the image recognition using the feature-value image data can be further improved.

In addition, the recognizing unit may recognize the abnormality relating to the object by using at least the three-dimensional image data and the feature-value image data as the input of the learned model. According to such a configuration, since the image recognition is performed using the three-dimensional image data obtained by imaging the object in addition to the feature-value image data indicating the feature value of the object, the accuracy of the image recognition can be further improved.

Furthermore, the image processing apparatus 100 may further include a display controlling unit 160 that functions as an example of a display controlling unit that causes feature-value image data to be displayed on the display unit 70. In this case, it is possible to present, to the user, the feature-value image data that is easy to visually ascertain with respect to the feature value that is the basis of the recognition result of the suspected pancreatic cancer, and it is possible to support the determination relating to the image by the user.

### (Modification 1)

In the first embodiment, the reference point setting unit 120 obtains a predetermined axis (center line) corresponding to the region of the object based on the plurality of points input through a mouse operation of the user, but a method of obtaining the predetermined axis is not limited thereto. For example, the reference point setting unit 120 may automatically detect a predetermined axis by using any image processing algorithm, or may obtain data including the predetermined axis from the data server 60. In addition, the reference point setting unit 120 may obtain information indicating the predetermined axis from an apparatus outside the image processing apparatus 100.

### (Modification 2)

In the first embodiment, the reference point setting unit 120 sets the reference point based on the predetermined axis (center line) corresponding to the region of the object, but may set any point with respect to the region of the object as the reference point. For example, as in the above-described embodiment, the reference point setting unit 120 may use a plurality of points input through a mouse operation of the user as the reference points, or may automatically set the reference points by using any method. In a case where the reference point is automatically set by using any method, the reference point setting unit 120 may detect a plurality of feature points relating to the region of the object by using, for example, a known feature point detection method, and use the plurality of feature points as the reference points, so that the same effects as those of the above-described embodiment can be achieved.

In a case where the plurality of reference points are discretely set, a voxel for which the value based on the feature value in the feature-value image data corresponding to the coordinates of the set reference point is set may also be discrete. In such a case, the feature value calculating unit 130 may calculate feature values at the coordinates corresponding to the plurality of reference points, and obtain a feature value between the plurality of reference points according to any known interpolation processing by using the coordinates corresponding to the plurality of reference points and the calculated feature value. As the interpolation processing, for example, spline interpolation, linear interpolation, interpolation using smoothing based on a Gaussian filter, and interpolation for performing any curve approximation may be used.

More specifically, the feature value calculating unit 130 may calculate an interpolation value between the coordinates of the first reference point and the coordinates of the second reference point by performing interpolation processing using the first feature value and the second feature value between the first reference point and the second reference point. In addition, the feature-value image data generating unit 140 may generate feature-value image data by setting values using interpolation values for voxels between a voxel based on the coordinates of the first reference point and a voxel based on the coordinates of the second reference point. By performing such interpolation processing, the accuracy of image recognition can be improved based on the coordinates corresponding to the feature value and the change in the feature value. In addition, it is possible to suppress a sudden change in the voxel value in the feature-value image data. Therefore, according to such a configuration, even when the reference points are discretely set, the accuracy of image recognition can be further improved.

### (Modification 3)

In the first embodiment, the feature value calculating unit 130 calculates a statistical feature value of CT values as a feature value, but may calculate a texture feature value relating to texture such as a radiomics feature value or a feature value relating to a shape such as a local structural feature value based on Hessian. Since an abnormal portion of the object may have different textures or shapes, the accuracy of abnormality recognition can be improved even when these feature values are used. Note that not only the above feature values but also other feature values can be used.

In addition, a plurality of feature values obtained through different calculations may be used. In a case where a plurality of feature values are used, the feature value calculating unit 130 calculates a plurality of feature values at respective reference points, and integrates the feature values by using four arithmetic operations or weighting to calculate one feature value. Alternatively, the feature-value image data generating unit 140 may generate one piece of feature-value image data by integrating a plurality of pieces of feature-value image data corresponding to the respective feature values by using four arithmetic operations or weighting. In this case, the feature value calculating unit 130 calculates a plurality of feature values at respective reference points, and the feature-value image data generating unit 140 generates a plurality of pieces of feature-value image data corresponding to the respective feature values. Thereafter, the feature-value image data generating unit 140 can generate one piece of feature-value image data by integrating the feature-value image data by using four arithmetic operations or weighting. In this case, the feature-value image data generating unit 140 may apply different types of expansion processing to each of the plurality of pieces of feature-value image data.

Alternatively, the feature-value image data generating unit 140 may generate a plurality of pieces of feature-value image data from the plurality of respective feature values, and the image recognizing unit 150 may input the plurality of pieces of feature-value image data into the image recognition model in the image recognizing unit 150 without integrating the plurality of pieces of feature-value image data. In this case, the training data may include feature-value image data of a type corresponding to a plurality of pieces of input feature-value image data.

### (Modification 4)

In the first embodiment, the feature value calculating unit 130 calculates feature values for voxels within a predetermined window size including a reference point, but voxels to be referred to at the time of calculating feature values are not limited thereto. For example, the feature value calculating unit 130 may calculate the feature value with reference to only a voxel on a center line in the vicinity of the reference point, or may calculate a tangential direction or a local extending direction of the center line at the reference point and calculate the feature value with reference to only a voxel in the vicinity of a line in the direction. In this way, the feature value calculating unit 130 can calculate a feature value that further ascertains a change in the vicinity of the center line. Furthermore, the feature value calculating unit 130 may calculate a feature value with reference to a voxel on a cross-section being orthogonal to the center line and including the reference point or on any cross-section. Since the abnormality of the object does not necessarily exist near the center line, by calculating the feature value with reference to a voxel on a cross-section orthogonal to the center line or on any cross-section, it is possible to obtain the feature value in which information at a position away from the center line is considered. The present disclosure is not limited to the above method, and the use of other methods does not impair the essence of the present disclosure.

In such a configuration, the feature value calculating unit 130 may determine any first cross-section including the first reference point, and calculate the first feature value based on a value of a voxel on the first cross-section. Similarly, the feature value calculating unit 130 may determine any second cross-section including the second reference point, and calculate the second feature value based on a value of a voxel on the second cross-section. Here, the first cross-section may be a cross-section orthogonal to a predetermined axis corresponding to the region of the object at the coordinates of the first reference point, and the second cross-section may be a cross-section orthogonal to a predetermined axis corresponding to the region of the object at the coordinates of the second reference point. According to such a configuration, since the feature value in which the information at a position away from the center line is considered can be obtained, the accuracy of the image recognition using the feature-value image data can be further improved.

### (Modification 5)

Furthermore, the feature value calculating unit 130 may apply any preprocessing to image data (CT image data or the like) referred to at the time of calculating a feature value. In a case where the image data referred to at the time of calculating a feature value is three-dimensional image data (CT image data or the like), the feature value calculating unit 130 may apply, for example, clipping process of a voxel value, gradation conversion, and resolution conversion as the preprocessing. In a case where the image data referred to at the time of calculating a feature value is image data representing a region relating to an object, the feature value calculating unit 130 may apply, for example, removal of a noise region as the preprocessing. According to such processing, the feature value calculating unit 130 can calculate a more appropriate feature value, and the feature-value image data generating unit 140 can generate more appropriate feature-value image data as input data to the learned model.

### (Modification 6)

In the first embodiment, the feature-value image data generating unit 140 sets a feature value calculated based on the reference point for a voxel of feature-value image data corresponding to the coordinates of the reference point, but may set a feature value for voxels within a predetermined range. For example, the feature-value image data generating unit 140 may set a value of a feature value for voxels within a predetermined window size including a voxel corresponding to the coordinates of the reference point. By setting a value based on the feature value by using such a method, the feature-value image data generating unit 140 can generate feature-value image data in which a value based on the feature value is set for voxels in a wider range for each reference point as in the feature-value image data 720 illustrated in Fig. 7B. In addition, the feature-value image data generating unit 140 may set a value of a feature value for voxels on a center line in the vicinity of the reference point, or may calculate a tangential direction or a local extending direction of the center line at the reference point and set a value of a feature value for voxels in the vicinity of a line in the direction. Note that the value of the set feature value may be a value of the feature value obtained for the reference point, or may be a value obtained by performing any weighting or the like according to a distance from the reference point. By using these methods, the feature-value image data generating unit 140 can set a value based on the feature value for voxels in a wider range without applying the expansion processing of the feature-value setting region. Note that a method of setting a value based on the feature value is not limited to the above method, and other methods can be used.

In such a configuration, the feature-value image data generating unit 140 can set the first feature value for voxels within a predetermined range including voxels corresponding to coordinates of the first reference point in the feature-value image data. Similarly, the feature-value image data generating unit 140 can set the second feature value for voxels within a predetermined range including a voxel corresponding to coordinates of the second reference point in the feature-value image data. According to such a configuration, since the feature-value image data in which a value based on the feature value is set in a wider range can be generated without applying the expansion processing of the feature-value setting region, the accuracy of the image recognition using the feature-value image data can be further improved.

Furthermore, in the first embodiment, the feature-value image data generating unit 140 sets a value for a voxel of the feature-value image data based on the coordinates of the reference point and a feature value corresponding thereto, but a method of setting a value based on the feature value is not limited thereto. For example, for any reference point, the feature-value image data generating unit 140 may generate feature-value image data by setting a value of a feature value calculated at the reference point for voxels corresponding to an orthogonal cross-section (or any cross-section) at the reference point. That is, the feature-value image data generating unit 140 may generate the feature-value image data by filling voxels corresponding to an orthogonal cross-section at any reference point with the value of the feature value calculated at the reference point. In this case, since there may be a voxel not included in the orthogonal cross-section at any reference point, voxels for which the value based on the feature value in the feature-value image data is set may be discrete. In order to prevent this, the feature-value image data generating unit 140 may apply interpolation processing (for example, smoothing based on a Gaussian filter or the like, or linear interpolation) to the feature-value image data by using any method to suppress a sudden change in the voxel value in the feature-value image data.

In such a configuration, the feature-value image data generating unit 140 may determine any first cross-section including a voxel corresponding to the coordinates of the first reference point, and set the first feature value for the voxel on the first cross-section. Furthermore, the feature-value image data generating unit 140 may determine any second cross-section including a voxel corresponding to the coordinates of the second reference point, and set the second feature value for the voxel on the second cross-section. The first cross-section may be a cross-section orthogonal to a predetermined axis corresponding to the region of the object at the coordinates of the first reference point, and the second cross-section may be a cross-section orthogonal to a predetermined axis corresponding to the region of the object at the coordinates of the second reference point. According to such a configuration, since the feature-value image data in which a value based on the feature value is set in a wider range can be generated without applying the expansion processing of the feature-value setting region, the accuracy of the image recognition using the feature-value image data can be further improved.

### (Modification 7)

In the first embodiment, the feature-value image data generating unit 140 uses "the fact that a predetermined number of times of expansion processing is applied" as the end condition of the expansion processing of the feature value setting range, but the end condition of the expansion processing of the feature value setting range is not limited thereto. For example, "the fact that values based on feature values are set for all voxels in the feature-value image data" may be set as an end condition of the expansion processing. By applying the expansion processing of the feature value setting range to the feature-value image data 710 illustrated in Fig. 7A using such an end condition of the expansion processing, a value based on a feature value can be set for the entire image as in feature-value image data 730 illustrated in Fig. 7C. In addition, "the fact that values based on feature values are set for all voxels existing within a predetermined distance with reference to the center line" may be set as an end condition of the expansion processing. By using the end condition of the expansion processing as described above, values based on feature values can be set for voxels in a wider range. It is also possible to use an end condition other than the above end condition.

### (Modification 8)

In the first embodiment, the feature-value image data generating unit 140 expands a feature-value setting region by applying the dilation processing to feature-value image data, but a method of expanding the feature-value setting region is not limited thereto. A method of expanding the feature-value setting region may be any method as long as spatial information is complemented with respect to a feature value in which the spatial information is lacking. For example, the feature-value image data generating unit 140 may use a method of mapping a feature value to each pixel in association with each pixel of feature-value image data and a reference point, or may use another method of spatially expanding a feature value obtained at a reference point, similarly to the above-described embodiment.

Specific examples of the former include expansion processing based on the nearest-neighbor interpolation. In a case where this method is applied, the feature-value image data generating unit 140 searches for a reference point closest to any voxel in feature-value image data, and sets a value of the feature value calculated at the reference point for the voxel.

Specific examples of the latter include processing based on a region growing method. In a case where this method is applied, the feature-value image data generating unit 140 can spatially expand the feature-value setting region similarly to the dilation processing used in the above embodiment, and can further expand the feature-value setting region based on the similarity with an adjacent voxel. For example, by using the condition for expansion to an adjacent voxel having a CT value that is likely to be an object, the feature-value image data generating unit 140 can expand a value based on a feature value only to voxels having the CT value that is likely to indicate the object. In a case where the object is the pancreas, for example, the feature-value image data generating unit 140 expands the feature-value setting region only to the voxel having the CT value of -50 to 200 HU, so that it is possible to suppress expansion to a surrounding tissue region such as a visceral fat region or a contrasted blood vessel region having different ranges of CT values. Note that various conditions other than this can be used as a condition for expanding a region.

Furthermore, when expanding the feature-value setting region, the feature-value image data generating unit 140 may calculate a weight for attenuating a value of a feature value based on a distance from a voxel corresponding to coordinates of a reference point or the number of times of expansion. In this case, the feature-value image data generating unit 140 can attenuate the value of the feature value set for the voxel of the feature-value image data when expanding the feature-value setting region by using the weight. Note that a method of expanding the feature-value setting region is not limited to the above-described expansion method, and the essence of the present disclosure is not impaired even if another expansion method is used.

In such a configuration, the feature-value image data generating unit 140 may calculate a weight corresponding to a voxel of the feature-value image data based on distances from the coordinates of the first reference point and the coordinates of the second reference point. In this case, in a region where a value is set based on the coordinates of the first reference point, the feature-value image data generating unit 140 may set a value based on the first feature value for the voxel of the feature-value image data by using the weight based on the distance from the coordinates of the first reference point. Furthermore, similarly, in a region where a value is set based on the coordinates of the second reference point, the feature-value image data generating unit 140 may set a value based on the second feature value for the voxel of the feature-value image data by using the weight based on the distance from the coordinates of the second reference point. According to such a configuration, it is possible to generate the feature-value image data in which a value based on a feature value more appropriate for the reference point is set in a wider range, and thus, it is possible to further improve the accuracy of the image recognition using the feature-value image data.

### (Modification 9)

In the first embodiment, the feature-value image data generating unit 140 expands the feature-value setting region by using the single end condition of the expansion processing, but a plurality of different end conditions may be used. In a case of using a plurality of different end conditions of expansion processing, the feature-value image data generating unit 140 may determine whether each end condition is satisfied, and determine whether the condition is satisfied based on a logical operation such as OR or AND. In addition, the feature-value image data generating unit 140 may generate, using the plurality of different end conditions of expansion processing, a plurality of pieces of feature-value image data corresponding to the respective end conditions. For example, as a plurality of different end conditions, the number of times of expanding the feature-value setting region is set to 5, 10, or 20, a plurality of pieces of feature-value image data having different expansion ranges may be generated, and feature-value image data in which the plurality of pieces of feature-value image data are integrated may be generated by using a weight corresponding to the number of times of expansion. According to such a configuration, it is possible to generate the feature-value image data in which a value of a feature value is attenuated as a distance from a voxel corresponding to the coordinates of the reference point increases.

As another example using a plurality of different end conditions, the feature-value image data generating unit 140 may generate a plurality of pieces of feature-value image data corresponding to the plurality of respective different end conditions as described above, and the image recognizing unit 150 may input the plurality of pieces of feature-value image data into the image recognition model. Note that, in this case, the image recognizing unit 150 may use, as the input of the learned model, channel combination image data obtained by combining a plurality of pieces of feature-value image data as separate channel data. The image recognizing unit 150 may input a plurality of pieces of feature-value image data into different input layers of the learned model. In this case, the training data may include feature-value image data of a type corresponding to a plurality of pieces of input feature-value image data.

### (Modification 10)

In the first embodiment, the feature-value image data generating unit 140 expands the feature-value setting region after setting the value of the feature value for the voxel of the feature-value image data. Alternatively, the feature-value image data generating unit 140 may generate index image data in which an index of a reference point is a voxel value. In this case, after applying the dilation processing to the generated index image data, the feature-value image data generating unit 140 may set the value of the feature value for the feature-value image data with reference to the voxel value of the index image data. Even with such a configuration, the same effects as those of the above embodiment can be achieved.

### (Modification 11)

In the first embodiment, the image recognizing unit 150 recognizes an abnormality relating to an object by using the image recognition model having the three-dimensional image data (CT image data) and the feature-value image data as the input, but an input of the image recognition model is not limited thereto. For example, only the feature-value image data may be used as an input of the image recognition model, or image data other than the three-dimensional image data and the feature-value image data may also be used as an input of the image recognition model. Here, as the image data other than the three-dimensional image data and the feature-value image data, for example, mask image data or probability map data representing a region relating to an object such as a pancreas region or a pancreatic duct region obtained by using any method may be used. In addition, a probability map regarding indirect findings relating to pancreatic cancer (abnormality of an object) such as pancreatic atrophy, pancreatic duct dilatation, pancreatic duct obstruction, and pancreatic tumor generated by using any method may be used. By inputting such image data together with the feature-value image data into the image recognition model, it is possible to recognize the abnormality of the object with higher accuracy. In this case, the training data may include image data of a type corresponding to the input image data.

### (Modification 12)

In the first embodiment, the image processing apparatus 100 recognizes suspected pancreatic cancer depicted in three-dimensional image data, but may be configured to recognize other abnormalities relating to the pancreas, such as pancreatic atrophy, pancreatic duct dilatation, pancreatic duct obstruction, pancreatic tumor, and pancreatitis. The object may be not only the pancreas but also other organs such as a blood vessel, a spinal canal, and a rib. In a case where a blood vessel is an object, for example, the image recognizing unit 150 recognizes angiostenosis, thrombus, calcification, and the like as abnormalities by using an image recognition model. In a case where the spinal canal is an object, for example, the image recognizing unit 150 recognizes spinal canal stenosis, spinal cord tumor, and the like as abnormalities by using the image recognition model. In a case where the rib is an object, for example, the image recognizing unit 150 recognizes a fracture or the like as an abnormality by using the image recognition model. As a feature value, a feature value suitable for recognizing a target abnormality may be used. In these cases, the training data may include feature-value image data regarding a target organ as input data and ground truth data annotated with respect to an abnormality to be recognized as output data.

### <Second Embodiment>

### (Overview)

In a second embodiment of the present disclosure, an example will be described in which region information of an object is used at the time of calculating a feature value and generating feature-value image data.

### (System configuration)

Since a configuration of an image processing system including an image processing apparatus 800 according to the second embodiment is similar to that of the image processing system 90 according to the first embodiment, the description thereof will be omitted.

### (Functional configuration)

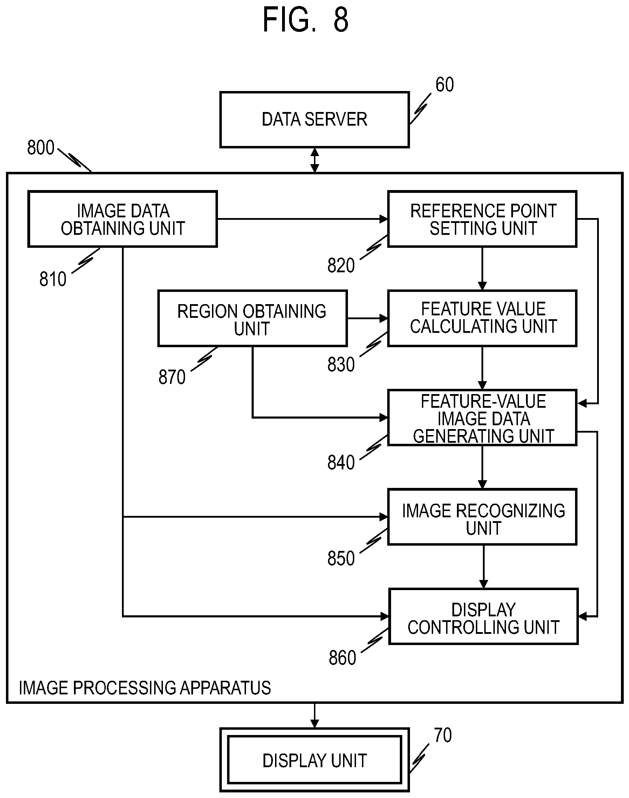

Hereinafter, a functional configuration of the image processing apparatus 800 according to the second embodiment will be described based on the functional configuration of the first embodiment with reference to Fig. 8. Fig. 8 illustrates an example of a functional configuration of the image processing apparatus 800 according to the second embodiment. Note that an image data obtaining unit 810, a reference point setting unit 820, and a display controlling unit 860 are similar to the image data obtaining unit 110, the reference point setting unit 120, and the display controlling unit 160 according to the first embodiment, and thus description thereof will be omitted.

The region obtaining unit 870 obtains image data representing a region relating to the object depicted in the three-dimensional image data. Here, the object in the second embodiment is a pancreas as in the first embodiment. In addition, the region relating to the object is a region including at least one of a region of the object and a region of a structure included in the object. In the second embodiment, the region of the object is a pancreas region, and the region of the structure included in the object is a pancreatic duct region (a region of a tubular structure present in the pancreas). The image data representing the region (hereinafter, referred to as region image data) is image data representing a target region in a distinguishable form, and is, for example, multi-valued image data. The region image data of the pancreas and the pancreatic duct may be obtained from the data server 60, or may be obtained by using CT image data obtained by the image data obtaining unit 810. For example, the region obtaining unit 870 may obtain a result of estimating each region output from the learned model as region image data by using the CT image data as an input of the learned model. Note that the learned model may be a model based on trained deep learning or any other known image recognition model. In addition, the region obtaining unit 870 may obtain the region image data through rule-based processing using the CT image data.

The feature value calculating unit 830 calculates a feature value regarding the object based on the coordinates of each reference point. The feature value in the second embodiment is a ratio of an area of a pancreas region and an area of a pancreatic duct region on a cross-section orthogonal to a vector representing an extending direction of a center line at any reference point. Here, the ratio of the area of the pancreas region and the area of the pancreatic duct region on the cross-section orthogonal to the vector representing the extending direction of the center line at the reference point is an example of a comparison value between a feature value calculated based on the object region and a feature value calculated based on the tubular structure region. Hereinafter, the cross-section orthogonal to the vector representing the extending direction of the center line at any reference point will be referred to as an orthogonal cross-section.

Important indirect findings regarding pancreatic cancer include pancreatic duct dilatation and localized atrophy of the pancreas. These can be ascertained by comparing the local size of the pancreas with the size of the pancreatic duct. Therefore, the ratio of the area of the pancreas and the area of the pancreatic duct on the orthogonal cross-section, which is the feature value in the second embodiment, is one of the feature values that can realize ascertaining (grasping) of indirect findings such as pancreatic duct dilatation and localized atrophy of the pancreas. In addition, a ratio of diameters of the pancreas and the pancreatic duct in any cross-section, a ratio of perimeters of the pancreas and the pancreatic duct, and the like are feature values that can similarly ascertain indirect findings such as pancreatic duct dilatation. Further, the localized atrophy of the pancreas can be ascertained only by a feature value obtained from the pancreas region, such as a diameter, an area, or a perimeter of the pancreas. Furthermore, the pancreatic duct dilatation can be ascertained only by a feature value obtained from the pancreatic duct region, such as a diameter, an area, or a perimeter of the pancreatic duct. As described above, by using the region information regarding the pancreas, it is possible to obtain the feature value in which a shape of the structure regarding the pancreas is considered. Such a feature value can be an important clue for recognizing pancreatic cancer.

The feature-value image data generating unit 840 initializes the feature-value image data, and generates the feature-value image data by setting a value for each voxel of the feature-value image data based on coordinates of a plurality of reference points and feature values corresponding to the coordinates. Further, the feature-value setting region is expanded with respect to voxels corresponding to the object region by a predetermined algorithm.

### (Processing procedure)

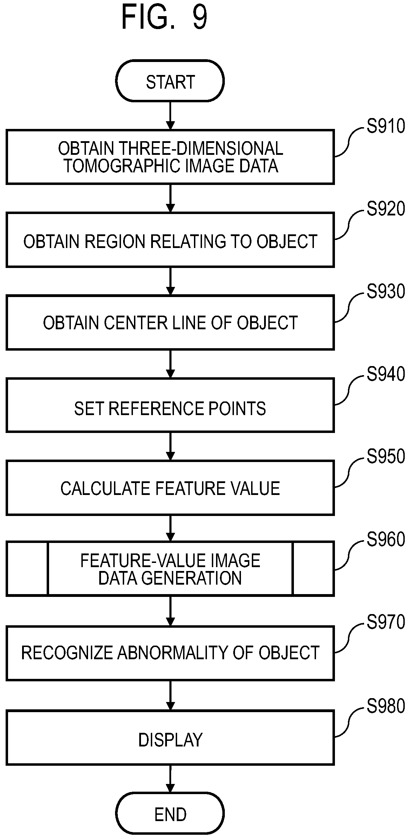

Next, a processing procedure of the image processing apparatus 800 according to the second embodiment will be described with reference to Fig. 9. Note that steps S910, S930, S940, S970, and S980 are similar to steps S310, S320, S330, S360, and S370 in the first embodiment, respectively, and thus description thereof will be omitted.

### (Steps S910 to S920)

When three-dimensional image data is obtained in step S910, the processing proceeds to step S920. In step S920, the region obtaining unit 870 obtains region image data regarding the object corresponding to the three-dimensional image data from the data server 60, and transmits the region image data to the feature value calculating unit 830 and the feature-value image data generating unit 840. In the second embodiment, the region obtaining unit 870 obtains region image data of the pancreas and the pancreatic duct as the region image data regarding the object. The region obtaining unit 870 may obtain the region image data regarding the object by using the three-dimensional image data obtained in step S910.

### (Steps S930 to S950)

Thereafter, when a center line of the target region is obtained in step S930 and a reference point is set in step S940, the processing proceeds to step S950. In step S950, the feature value calculating unit 830 calculates a feature value regarding the pancreas based on the region relating to the pancreas and the coordinates of each reference point. In the second embodiment, the region relating to the pancreas includes a pancreas region and a pancreatic duct region, and the feature value regarding the pancreas is a ratio of an area of the pancreas and an area of the pancreatic duct calculated in an orthogonal cross-section at any reference point.

The feature value calculating unit 830 first calculates two orthogonal vectors with respect to a vector representing the extending direction of the center line at any reference point in order to calculate an orthogonal cross-section at the reference point with respect to the pancreas region image data and the pancreatic duct region image data. Note that any known method may be used as a method of calculating a vector representing the extending direction of the center line and two orthogonal vectors with respect to the vector.

Next, the feature value calculating unit 830 obtains orthogonal cross-sectional data of the pancreas region and orthogonal cross-sectional data of the pancreatic duct region by reconstructing voxels included in a plane including the two orthogonal vectors as one image for each of the pancreas region image data and the pancreatic duct region image data. That is, the feature value calculating unit 830 obtains data of a cross-section of which a normal vector is a vector indicating an extending direction of the center line. These orthogonal cross-sections include a voxel corresponding to the coordinates of any reference point. The feature value calculating unit 830 calculates an area of the pancreas region and an area of the pancreatic duct region respectively from the orthogonal cross-sectional data of the pancreas region and the orthogonal cross-sectional data of the pancreatic duct region, and calculates a ratio of the calculated two areas as a feature value at any reference point. When the feature value calculating unit 830 calculates feature values (area ratios) for all the reference points, the processing proceeds to step S960.

### (Step S960)

In step S960, the feature-value image data generating unit 840 generates the feature-value image data by setting a value based on the feature value for a voxel of the feature-value image data using the pancreas region image data and the coordinates of the plurality of reference points. In this step, the feature-value image data generating unit 840 executes processing similar to steps S351 to S354 of the first embodiment. The difference from the first embodiment is the end condition of the expansion processing and the processing corresponding to step S355. In the second embodiment, "the fact that values based on feature values are set for all voxels corresponding to the pancreas region" is set as the end condition of the expansion processing. The expansion processing of the feature-value setting region is performed by the dilation processing as in the first embodiment, but the feature-value image data generating unit 840 expands the feature-value setting region only to the voxels in the pancreas region. As a result, the feature-value image data generating unit 840 can generate feature-value image data including a feature-value setting region conforming to the shape of the pancreas as in feature-value image data 740 illustrated in Fig. 7D.

### (Steps S970 to S980)

Thereafter, in step S970, an abnormality of the object is recognized by using the feature-value image data, and display processing is performed in step S980. When the display processing is performed in step S980, a series of processing by the image processing apparatus 800 according to the second embodiment ends.

As described above, the image processing apparatus 800 according to the second embodiment may further include the region obtaining unit 870 that functions as an example of a region obtaining unit that obtains information indicating a region relating to an object from three-dimensional image data. Further, the feature value calculating unit 830 according to the second embodiment may calculate the first feature value and the second feature value based on the region relating to the object. More specifically, the region obtaining unit 870 may obtain, as the information indicating the region relating to the object, at least information indicating an object region which is the region of the object and information indicating a tubular structure region which is the region of the tubular structure in the object. In addition, the feature value calculating unit 830 may calculate the first feature value and the second feature value based on the object region and the tubular structure region. Here, the feature value calculating unit 830 may calculate, as the first feature value and the second feature value, a comparison value between a feature value calculated based on the object region and a feature value calculated based on the tubular structure region.

As described above, the image processing apparatus 800 according to the second embodiment sets the reference point for the object to calculate the feature value, and images the feature value based on the coordinate values of the reference point and the value of the feature value. As a result, the image data relating to the feature value of the object can be input into the image recognition model. Since such a feature value is a feature value in which a complicated anatomical structure of an object is explicitly considered, it is possible to improve the accuracy of abnormality recognition particularly for an elongated organ or the like. In addition, since a feature value in which a shape of the object useful for ascertaining the indirect findings of the abnormality of the object is considered can be obtained as the feature value, the accuracy of the image recognition for recognizing the abnormality of the object can be further improved.

Furthermore, the feature-value image data generating unit 840 according to the second embodiment may generate feature-value image data based on the region relating to the object. More specifically, the feature-value image data generating unit 840 may apply at least one of the dilation processing, the region growing processing, and the nearest-neighbor interpolation processing to the feature-value image data based on the region relating to the object, and may expand the setting ranges of the first feature value and the second feature value set for the feature-value image data. As a result, the feature-value image data generating unit 840 may set a value based on the first feature value for a voxel of the feature-value image data based on the coordinates of the first reference point and the region relating to the object, and set a value based on the second feature value for a voxel of the feature-value image data based on the coordinates of the second reference point and the region relating to the object. According to such a configuration, since the feature-value image data conforming to the shape of the object can be generated, the accuracy of the image recognition using the feature-value image data can be further improved.

### (Modification 13)

In the second embodiment, the feature value calculating unit 830 calculates, as the feature value at any reference point, the ratio of the areas of the region of the object (pancreas region) and the region of another structure (pancreatic duct region) present in the object on the orthogonal cross-section. Alternatively, the feature value calculating unit 830 may calculate, as the feature value at any reference point, another shape feature value regarding the object, such as a ratio of major axes, a ratio of minor axes, or a ratio of perimeters between the region of the object and the region of another structure.

As a comparison value between the feature value calculated based on the object region and the feature value calculated based on the tubular structure region, a difference between values relating to these two regions may be used. A shape feature value is not limited to the ratio of the values relating to these two regions, and an area, a diameter, and a perimeter of the pancreas region or the pancreatic duct region may be calculated as the feature value. For example, by using at least one of an area, a diameter, and a perimeter of the pancreas region at any reference point as a feature value, it is possible to generate feature-value image data from which a localized atrophy of the pancreas which is known as one of indirect findings of pancreatic cancer can be ascertained. In addition, by using at least one of an area, a diameter, and a perimeter of the pancreatic duct region at any reference point as a feature value, it is possible to generate feature-value image data from which pancreatic duct dilatation or pancreatic duct obstruction which is known as one of indirect findings of pancreatic cancer can be ascertained. The shape feature value may be a combination of a comparison value between the feature value calculated based on the object region and the feature value calculated based on the tubular structure region, and at least one of an area, a diameter, and a perimeter of the pancreas region or the pancreatic duct region.

In such a configuration, the region obtaining unit 870 may also obtain at least information indicating an object region that is a region of the object as the information indicating the region relating to the object. In this case, the feature value calculating unit 830 may calculate the first feature value and the second feature value based on the object region. The region obtaining unit 870 may also obtain information indicating at least a tubular structure region that is a region of the tubular structure in the object as the information indicating the region relating to the object. In this case, the feature value calculating unit 830 may calculate the first feature value and the second feature value based on the tubular structure region. Even with such a configuration, it is possible to obtain, as the feature value, a feature value in which a shape of the object useful for ascertaining the indirect findings of the abnormality of the object is considered, and thus, it is possible to further improve the accuracy of the image recognition for recognizing the abnormality of the object.

### (Modification 14)

In the second embodiment, the feature value calculating unit 830 calculates the feature value with reference to the voxel on the cross-section orthogonal to the center line including the reference point, but the feature value calculating unit may calculate the feature value with reference to a voxel on any cross-section without being limited to the orthogonal cross-section.

### (Modification 15)

In the second embodiment, the feature-value image data generating unit 840 sets the expansion range of the feature-value setting region as the object region (pancreas region), but may set another structure region (for example, pancreatic duct region) in the object as the expansion range. A region including the object region and another structure region (for example, a blood vessel region) near the object may be set as the expansion range.

In addition, in the second embodiment, an example has been described in which the feature-value image data generating unit 840 limits the expansion range of the feature-value setting region by using the region relating to the object, but a method of using the region relating to the object is not limited thereto. For example, the feature-value image data generating unit 840 may determine the number of times of expanding the feature-value setting region according to the size (for example, a volume or a diameter) of the region relating to the object and perform the expansion. In this case, for example, by increasing the number of times of expanding the feature-value setting region as the volume of the region of the object becomes larger and decreasing the number of times of expanding the feature-value setting region as the volume becomes smaller, it is possible to obtain the same effect as that of the second embodiment. In addition, the feature-value image data generating unit 840 can generate feature-value image data according to the region of the object, and can further improve the accuracy of abnormality recognition.

Furthermore, as another example of the method of using the region relating to the object, the feature-value image data generating unit 840 may generate a weight map from the region relating to the object, and weight (attenuate) the feature value according to the weight map when setting a value based on the feature value for the voxel of the feature-value image data. With regard to the weight map, for example, by setting the weight to be higher for a voxel closer to the center of the object region and to be lower for a voxel closer to the peripheral edge of the object region, it is possible to generate a map that relatively emphasizes the vicinity of the center of the object region. Alternatively, it is possible to generate a weight map that relatively emphasizes the inside of the object region by setting the weight of the voxel inside the object region to be high and the weight of the voxel outside the object region to be low. As a special example, the feature-value image data generating unit 840 may use a binary weight map in which the weight inside the object region is 1 and the weight outside the object region is 0. By weighting (attenuating) the values of the voxels of the feature-value image data 730 illustrated in Fig. 7C using the binary weight map, it is possible to generate feature-value image data such as the feature-value image data 740 illustrated in Fig. 7D similarly to the second embodiment.

In such a configuration, the feature-value image data generating unit 840 may calculate a weight corresponding to a voxel in the feature-value image data based on the region relating to the object. In this case, the feature-value image data generating unit 840 may set a value based on the calculated weight and the first feature value for the voxel of the feature-value image data based on the coordinates of the first reference point and the region relating to the object. In addition, the feature-value image data generating unit 840 may set a value based on the calculated weight and the second feature value for the voxel of the feature-value image data based on the coordinates of the second reference point and the region relating to the object. According to such a configuration, it is possible to generate the feature-value image data in which a shape of the object is considered, and to further improve the accuracy of the image recognition using the feature-value image data.

### (Modification 16)

In the second embodiment, the feature-value image data generating unit 840 sets a value for a voxel of the feature-value image data based on the coordinates of the reference point and the feature value corresponding thereto, but a method of setting a value based on the feature values is not limited thereto. For example, for any reference point, the feature-value image data generating unit 840 may generate feature-value image data by setting a value of a feature value calculated at the reference point for a voxel corresponding to the pancreas region on an orthogonal cross-section (or on any cross-section) at the reference point. That is, the feature-value image data generating unit 840 may generate the feature-value image data by filling the voxel corresponding to the pancreas region on the orthogonal cross-section at any reference point with the value of the feature value calculated at the reference point. In this case, since there may be a voxel not included in the orthogonal cross-section at any reference point, a voxel for which the value based on the feature value in the feature-value image data is set may be discrete. In order to prevent this, the feature-value image data generating unit 840 may apply interpolation processing (for example, smoothing based on a Gaussian filter or the like, and linear interpolation) to the feature-value image data by using any method to suppress a sudden change in the voxel value in the feature-value image data.

### (Modification 17)

In the second embodiment, the image recognizing unit 850 has a configuration including a single image recognition model as in the first embodiment, but may have a configuration including a plurality of image recognition models. For example, in a case where the object is a pancreas, the image recognizing unit 850 may have a plurality of image recognition models configured to recognize respective abnormalities such as pancreatic atrophy, pancreatic duct dilatation, pancreatic duct obstruction, and a pancreatic tumor. Further, the image recognizing unit 850 may recognize suspected pancreatic cancer by using another recognizer (learned model) configured to use a recognition result of pancreatic duct dilatation, pancreatic duct obstruction, or a pancreatic tumor (indirect findings of pancreatic cancer) as an input. By recognizing the abnormality stepwise in this manner, it can be expected to improve the recognition accuracy of suspected pancreatic cancer. Note that training data of such a recognizer may include the recognition result of indirect findings of pancreatic cancer as input data and the recognition result of suspected pancreatic cancer as output data. The recognition result of suspected pancreatic cancer may be, for example, a recognition result of suspected pancreatic cancer for a recognition result of indirect findings of pancreatic cancer by a doctor or the like.

As another example of the configuration including the plurality of image recognition models, the image recognizing unit 850 may have a configuration including a plurality of image recognition models respectively corresponding to a plurality of pieces of feature-value image data generated from a plurality of different feature values. For example, the image recognizing unit 850 may have an image recognition model that uses feature-value image data generated based on the area of the pancreas in the orthogonal cross-section (an example of the feature value) as an input, and an image recognition model that uses feature-value image data generated based on the area of the pancreatic duct in the orthogonal cross-section (an example of the feature value) as an input. In the case of a configuration including such two image recognition models, the image recognizing unit 850 may obtain a comprehensive recognition result by combining the recognition results of the two image recognition models.

Alternatively, for example, in a case where it is determined that the reliability of any of the feature values is low, the image recognizing unit 850 may recognize the abnormality of the object by switching image recognition models to be used. In a case where the area of the pancreas or the pancreatic duct in the orthogonal cross-section is taken as the feature value, the reliability of the feature value mainly depends on the certainty of the pancreas region or the pancreatic duct region. Therefore, the image recognizing unit 850 may determine whether or not the pancreas region or the pancreatic duct region is correctly extracted (that is, whether the reliability is high or low) based on, for example, variations in volume and diameter of these regions. By switching and using the plurality of image recognition models as described above, the image recognizing unit 850 can obtain a more robust abnormality recognition result.

### <Third Embodiment>

In a third embodiment of the present disclosure, an example will be described in which a higher-dimensional feature value is calculated at each reference point to generate feature-value image data.

### (System configuration)

Since a configuration of the image processing system including an image processing apparatus 800 according to the third embodiment is similar to that of the image processing system 90 according to the second embodiment, the description thereof will be omitted.

### (Functional configuration)

A functional configuration of the image processing apparatus 800 according to the third embodiment will be described based on the second embodiment with reference to Fig. 8. Note that the image data obtaining unit 810, the reference point setting unit 820, the image recognizing unit 850, and the display controlling unit 860 are similar to the image data obtaining unit 810, the reference point setting unit 820, the image recognizing unit 850, and the display controlling unit 860 according to the second embodiment, and thus description thereof will be omitted.

The feature value calculating unit 830 calculates a feature value relating to an object along a plurality of different azimuth angles for any cross-section (for example, orthogonal cross-section) at each reference point. In the third embodiment, for any reference point, a radius of the pancreas region along the azimuth angle at intervals of 30 degrees with reference to a predetermined axis on the orthogonal cross-section is calculated as the feature value. That is, the feature value calculating unit 830 obtains a plurality of feature values (high-dimensional feature values) at the respective reference points.

The feature-value image data generating unit 840 generates feature-value image data by setting a value based on a feature value for a voxel of the feature-value image data based on a plurality of different azimuth angles at the time of calculating the feature value for any cross-section at each reference point. In the third embodiment, the feature value calculating unit 830 calculates feature values along the azimuth angle at intervals of 30 degrees in the orthogonal cross-section. Therefore, in accordance with the calculation processing by the feature value calculating unit 830, the feature-value image data generating unit 840 generates the feature-value image data by setting the value of the feature value along each azimuth angle for voxels included in the fan-shaped region every 30 degrees from a voxel corresponding to the coordinates of the reference point.

### (Processing procedure)

Next, a processing procedure of the image processing apparatus 800 according to the third embodiment will be described based on the second embodiment with reference to Fig. 9. Note that the processing of steps S910 to S940, S970, and S980 is similar to the processing in the same step according to the second embodiment, and thus description thereof will be omitted.

### (Steps S910 to S950)

After the processing in steps S910 to S940 is performed, the processing proceeds to step S950. In step S950, the feature value calculating unit 830 obtains orthogonal cross-sectional data of the pancreas region from the pancreas region image data for any reference point, and calculates, as a feature value, a radius of the pancreas region along an azimuth angle at intervals of 30 degrees with respect to a predetermined axis on the orthogonal cross-section. The radius of the pancreas region along the azimuth angle is a radius of the pancreas region on the line of the direction vector representing the azimuth angle starting from the voxel corresponding to the coordinates of the reference point in the orthogonal cross-section.

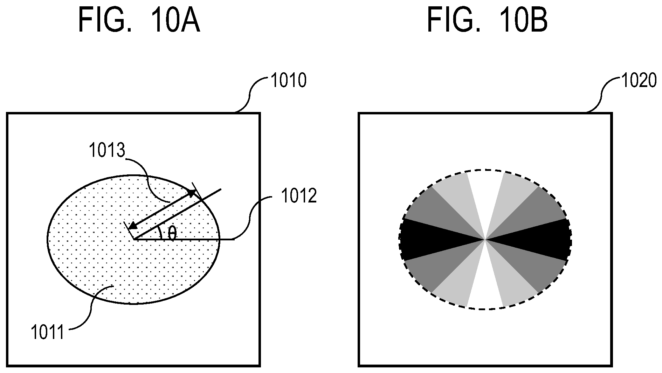

Here, the feature value calculation processing according to the third embodiment will be described in detail with reference to Fig. 10A. Fig. 10A illustrates orthogonal cross-sectional data 1010 of a pancreas region corresponding to coordinates of any reference point, and includes a pancreas region 1011 on the orthogonal cross-section. For example, the feature value calculating unit 830 calculates, as a feature value, a radius 1013 of the pancreas region at intervals of 30 degrees with reference to an axis 1012 (an example of a predetermined axis on an orthogonal cross-section) parallel to the X axis. That is, the feature value calculating unit 830 obtains a total of 12 feature values (radii of the pancreas region) by calculating radii at azimuth angles of 0, 30, 60, ..., and 330 degrees in 12 directions in total. Note that the plurality of azimuth angles at which feature values are calculated are not limited to the above set values, and the intervals between the azimuth angles at which the feature values are calculated need not be equal.

### (Step S960)

In step S960, the feature-value image data generating unit 840 generates feature-value image data based on a plurality of different azimuth angles at the time of calculating the feature values in step S950 and the feature values (radii of the pancreas region) corresponding thereto. In the third embodiment, the feature-value image data generating unit 840 determines a region in which a feature value is set for each azimuth angle, and generating feature-value image data by setting a value of the feature value calculated at the corresponding azimuth angle for voxels included in the region in which the feature value is set.

The feature-value image data generation processing according to the third embodiment will be described in detail with reference to Fig. 10B. Fig. 10B illustrates orthogonal cross-sectional data 1020 of feature-value image data corresponding to coordinates of any reference point. A value based on the feature value is set for each voxel, a dark color indicates that a voxel value is great, and a light color indicates that a voxel value is small. The feature-value image data generating unit 840 according to the third embodiment sets a region in which a feature value corresponding to any azimuth angle is set as a partial region (fan-shaped region) of the pancreas region represented by a range including the azimuth angle. For example, a region in which a feature value corresponding to an azimuth angle of 0 degrees is set is a partial region of a pancreas region included in a range of -15 to +15 degrees with reference to a predetermined axis. The feature-value image data generating unit 840 sets a value of the feature value calculated at an azimuth angle of 0 degrees for the voxels of the feature-value image data corresponding to the partial region of the pancreas region. Similarly, at an azimuth angle of 30 degrees, the feature-value image data generating unit 840 sets a region in which a feature value is set as a partial region of the pancreas region included in the range of +15 to +45 degrees, and sets a value of a feature value calculated at the azimuth angle of 30 degrees with respect to the partial region.

The feature-value image data generating unit 840 can generate the orthogonal cross-sectional data 1020 of the feature-value image data as illustrated in Fig. 10B by executing similar processing for all azimuth angles for any reference point. The feature-value image data generating unit 840 executes the above-described processing on the orthogonal cross-sections at all the reference points to generate feature-value image data having the same image size as CT image data.

When the value based on the feature value is set by using the above-described method, there may be a voxel not included in the orthogonal cross-section at any reference point, and thus voxels for which the value based on the feature value in the feature-value image data is set may be discrete. In order to prevent this, the feature-value image data generating unit 840 may suppress a sudden change in the voxel value in the feature-value image data by applying any interpolation processing (for example, smoothing based on a Gaussian filter or the like, or linear interpolation). Thereafter, when the processing in steps S970 and S980 is performed, a series of processing by the image processing apparatus 800 according to the third embodiment ends.

As described above, the feature value calculating unit 830 according to the third embodiment may determine any first cross-section including the first reference point, and calculate the first feature value based on a value of a voxel on the first cross-section. Similarly, the feature value calculating unit 830 may determine any second cross-section including the second reference point, and calculate the second feature value based on a value of a voxel on the second cross-section. Here, the first cross-section may be a cross-section orthogonal to a predetermined axis and corresponding to the region of the object at the coordinates of the first reference point, and the second cross-section may be a cross-section orthogonal to a predetermined axis and corresponding to the region of the object at the coordinates of the second reference point. Further, the feature value calculating unit 830 may calculate the first feature value at each of a plurality of different azimuth angles on the first cross-section and calculate the second feature value at each of a plurality of different azimuth angles on the second cross-section. More specifically, the feature value calculating unit 830 may set the first feature value for a voxel on the cross-section corresponding to the first cross-section in the feature-value image data based on the azimuth angle at which the first feature value is calculated. Similarly, the feature value calculating unit 830 may set the second feature value for a voxel on the cross-section corresponding to the second cross-section in the feature-value image data based on the azimuth angle at which the second feature value is calculated.

As described above, the image processing apparatus 800 according to the third embodiment sets the reference point for the object to calculate the feature value, and images the feature value based on the coordinate values of the reference point and the value of the feature value. As a result, the image processing apparatus 800 can input the image data relating to the feature value of the object into the image recognition model. Since such a feature value is a feature value in which a complicated anatomical structure of an object is explicitly considered, it is possible to improve the accuracy of abnormality recognition particularly for an elongated organ or the like. Further, since the image processing apparatus 800 according to the third embodiment can obtain a plurality of feature values at the respective reference points, the accuracy of image recognition can be further improved by using the feature-value image data.

### (Modification 18)

In the third embodiment, the feature value calculating unit 830 calculates a radius of the object region for each azimuth angle as a feature value at any reference point, but the feature value is not limited thereto. For example, the feature value calculating unit 830 may calculate a statistical feature value of voxel values of three-dimensional image data for each azimuth angle. In addition, in the third embodiment, the feature value calculating unit 830 calculates a feature value on a line of a direction vector of an azimuth angle starting from a voxel corresponding to coordinates of a reference point in any cross-section. On the other hand, the feature value calculating unit 830 may calculate the feature value from a region (for example, a fan-shaped region) defined by an azimuth angle in a predetermined range. For example, the feature value calculating unit 830 may calculate, as a feature value, an area of a region (fan-shaped region) defined by an azimuth angle in a predetermined range or a length of a portion corresponding to an arc of the fan-shaped region. In addition, the feature value calculating unit 830 may calculate, for the fan-shaped region, a texture feature value relating to a texture such as a radiomics feature value or a feature value relating to a shape such as a local structural feature value based on Hessian as a feature value at the reference point. In addition, the feature value calculating unit 830 according to the third embodiment calculates the feature value based on the object region, but may calculate the feature value based on another structure (for example, a pancreatic duct region) in the object.

### (Other Examples)

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Here, the processor or circuit may include a central processing unit (CPU), a micro processing unit (MPU), a graphics processing unit (GPU), an application specific integrated circuit (ASIC), or a field-programmable gate array (FPGA). In addition, the processor or circuit may include a digital signal processor (DSP), a data flow processor (DFP), or a neural processing unit (NPU).

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. An image processing apparatus (100, 800) comprising:
an image data obtaining unit (110, 810) configured to obtain three-dimensional image data including a plurality of pieces of tomographic image data;
a setting unit (120, 820) configured to set a first reference point and a second reference point in a region of an object depicted in the three-dimensional image data;
a calculating unit (130, 830) configured to calculate a first feature value relating to the object using the three-dimensional image data and coordinates of the first reference point, and calculate a second feature value relating to the object by using the three-dimensional image data and coordinates of the second reference point;
a generating unit (140, 840) configured to generate feature-value image data expressed in the same coordinate system as the three-dimensional image data by setting a value for a voxel based on the coordinates of the first reference point using the first feature value and setting a value for a voxel based on the coordinates of the second reference point using the second feature value; and
a recognizing unit (150, 850) configured to perform image recognition on the object using at least the feature-value image data as an input of a learned model.

2. The image processing apparatus according to claim 1, wherein the first reference point and the second reference point are set along a line parallel to an extending direction of the object.

3. The image processing apparatus according to claim 1 or 2, wherein the first feature value and the second feature value include at least one of a statistical value of intensity values, a shape feature value, a radiomics feature value, and a texture feature value.

4. The image processing apparatus according to any one of claims 1 to 3, further comprising:
a region obtaining unit configured to obtain information indicating a region relating to the object from the three-dimensional image data, wherein
the calculating unit is configured to calculate the first feature value and the second feature value by using the information indicating the region relating to the object.

5. The image processing apparatus according to claim 4, wherein the information indicating the region relating to the object is at least one of information indicating the region of the object and information indicating a region of a tubular structure in the object.

6. The image processing apparatus according to claim 5, wherein the calculating unit is configured to calculate, as the first feature value and the second feature value, a comparison value between a feature value calculated by using the information indicating the region of the object and a feature value calculated by using the information indicating the tubular structure region.

7. The image processing apparatus according to any one of claims 1 to 6, wherein the calculating unit is configured to determine a first cross-section including the first reference point, calculates a first feature value based on a value of a voxel on the first cross-section, determines a second cross-section including the second reference point, and calculates a second feature value based on a value of a voxel on the second cross-section.

8. The image processing apparatus according to claim 7, wherein the first cross-section is a cross-section orthogonal to a line parallel to an extending direction of the object at the coordinates of the first reference point, and the second cross-section is a cross-section orthogonal to a line parallel to an extending direction of the object at the coordinates of the second reference point.

9. The image processing apparatus according to claim 7 or 8, wherein:
the first feature value and the second feature value are values indicating a radius of the region of the object; and
the calculating unit is configured to calculate the first feature value at each of a plurality of azimuth angles on the first cross-section and calculate the second feature value at each of a plurality of azimuth angles on the second cross-section.

10. The image processing apparatus according to claim 9, wherein the generating unit is configured to (i) set the first feature value for a plurality of voxels on a cross-section of the feature-value image data corresponding to the first cross-section and included in a region set on the cross-section of the feature-value image data using an azimuth angle at which the first feature value is calculated, and (ii) set the second feature value for a plurality of voxels on a cross-section of the feature-value image data corresponding to the second cross-section and included in a region set on the cross-section of the feature-value image data using an azimuth angle at which the second feature value is calculated.

11. The image processing apparatus according to any one of claims 1 to 6, wherein the generating unit is configured to set the first feature value for at least one voxel including a voxel corresponding to the coordinates of the first reference point in the feature-value image data, and set the second feature value for at least one voxel including a voxel corresponding to the coordinates of the second reference point in the feature-value image data.

12. The image processing apparatus according to claim 11, wherein the generating unit is configured to apply at least one of dilation processing, region growing processing, and interpolation processing to the feature-value image data, and set values based on the first feature value and the second feature value for voxels of the feature-value image data by expanding setting ranges of the first feature value and the second feature value set in the feature-value image data.

13. The image processing apparatus according to claim 12, wherein the generating unit is configured to:
set values for a plurality of voxels including a voxel corresponding to the coordinates of the first reference point in the feature-value image data using a weight calculated according to a distance from the coordinates of the first reference point and the first feature value; and
set values for a plurality of voxels including a voxel corresponding to the coordinates of the second reference point in the feature-value image data using a weight calculated according to a distance from the coordinates of the second reference point and the second feature value.

14. The image processing apparatus according to any one of claims 11 to 13, further comprising:
a region obtaining unit configured to obtain information indicating a region relating to the object from the three-dimensional image data, wherein
the generating unit is configured to generate the feature-value image data based on the region relating to the object.

15. The image processing apparatus according to any one of claims 11 to 14, wherein the generating unit is configured to determine a first cross-section including a voxel corresponding to the coordinates of the first reference point, set the first feature value for a voxel on the first cross-section, determine a second cross-section including a voxel corresponding to the coordinates of the second reference point, and set the second feature value for a voxel on the second cross-section.

16. The image processing apparatus according to claim 15, wherein the first cross-section is a cross-section orthogonal to a line parallel to an extending direction of the object at the coordinates of the first reference point, and the second cross-section is a cross-section orthogonal to a line parallel to an extending direction of the object at the coordinates of the second reference point.

17. The image processing apparatus according to any one of claims 1 to 16, wherein the recognizing unit is configured to recognize an abnormality relating to the object by using at least the three-dimensional image data and the feature-value image data as the input of the learned model.

18. The image processing apparatus according to any one of claims 1 to 17, wherein:
the calculating unit is configured to calculate an interpolation value between the coordinates of the first reference point and the coordinates of the second reference point by performing interpolation processing using the first feature value and the second feature value; and
the generating unit is configured to set a value for a voxel between a voxel based on the coordinates of the first reference point and a voxel based on the coordinates of the second reference point using the interpolation value to generate the feature-value image data.

19. The image processing apparatus according to any one of claims 1 to 18, further comprising a display controlling unit is configured to cause the feature-value image data to be displayed on a display unit.

20. An image processing method comprising:
obtaining three-dimensional image data including a plurality of pieces of tomographic image data;
setting a first reference point and a second reference point within a region of the object depicted in the three-dimensional image data;
calculating a first feature value regarding the object using the three-dimensional image data and coordinates of the first reference point, and calculating a second feature value regarding the object using the three-dimensional image data and coordinates of the second reference point;
generating feature-value image data expressed in the same coordinate system as the three-dimensional image data by setting a value for a voxel based on the coordinates of the first reference point using the first feature value and setting a value for a voxel based on the coordinates of the second reference point using the second feature value; and
performing image recognition on the object using at least the feature-value image data as an input of a learned model.

21. A computer program comprising instructions which, when the program is executed by a computer, cause the computer to carry out the method of claim 20.
